# EUROPÄISCHE PATENTSCHRIFT

(11) **EP 1 761 428 B1**
(45) Veröffentlichungstag und Bekanntmachung des Hinweises auf die Patenterteilung: **09.07.2008**
(21) Anmeldenummer: 05745176.7
(22) Anmeldetag: 26.05.2005
(51) Int. Cl.: B62M 3/08

(54) **FUNKTIONELLE TRETMECHANIK**
FUNCTIONAL PEDAL MECHANISM
MECANISME DE PEDALIER FONCTIONNEL

(30) Priorität: 28.05.2004 DE 102004026724
(43) Veröffentlichungstag der Anmeldung: 14.03.2007
(73) Patentinhaber: Töpfer, Jörg, 07749 Jena (DE)
(72) Erfinder: Töpfer, Jörg, 07749 Jena (DE)
(74) Vertreter: Liedtke, Klaus
(86) Internationale Anmeldenummer: PCT/EP2005/005687
(87) Internationale Veröffentlichungsnummer: WO 2005/115826

(56) Entgegenhaltungen:
- WO-A-96/00679
- DE-A1- 3 218 290
- DE-A1- 19 531 457
- DE-U1- 29 901 785
- FR-A- 2 661 651

## Beschreibung

### Gebiet der Erfindung

Die Erfindung betrifft eine Tretmechanik eines Fahrrades, Fitness-, Rehabilitationsgerätes oder eines anderen Gerätes, die Anwendung findet bei der aktiven und/oder passiven Beugung und Streckung der Beine gemäss Oberbegriff des Anspruchs 1.

### Stand der Technik

Die DE-A-43 36 183 hat ein Fahrradpedal zum Gegenstand, welches die Eigenschaft hat, die Blutzirkulation im Fussgewölbe zu verbessern. Zu diesem Zweck ist am Pedal ein Massageorgan vorgesehen, welches beim Abwärtstreten auf das Fussgewölbe drückt und sich daran abwälzt. Das Massageorgan besteht aus einem an der Pedalachse fest angeordneten Exzenterteil, welches mit der Pedalachse mitdrehend gekoppelt ist. Beim Betätigen des Tretkurbelarmes vollführt das Exzenterteil eine Schwenkbewegung in einer Ebene, welche parallel zur Ebene der Tretkurbelwange ist. Das Exzenterteil kann kugel- oder birnenförmig ausgebildet sein, ragt also aus der Ebene der Schuhauflage heraus.

Die DE 299-01-785-U1 offenbart einVerbindungssystem für ein Fahrradpedal das bevorzugt zur effektiven Abkopplung zwischen Pedal und Schuh im Falle eines Sturzes sorgt. Die dazu vorgesehene Einkerbung im Bereich des Fußballens erlaubt einen größeren Bewegungsspielraum im Fersenbereich.

Die US 5,199,324 offenbart eine Pedalanordnung für Fahrräder, welche an der Tretkurbel in einem vorbestimmten Winkel anordenbar ist. Bei einer Drehung der Tretkurbel variiert dabei der Neigungswinkel des Pedals. Der Neigungswinkel des Pedals ist die Summe eines ersten inkrementalen Neigungswinkels, welcher durch eine angeschrägte Nocke bestimmt ist, und eines zweiten inkrementalen Neigungswinkels, welcher von einer geneigten Pedalplattform herrührt.

Die US 4,599,915 offenbart ein Pedal zur Verwendung an irgendwelchen pedalgetriebenen Fahrzeugen oder Geräten, welches in ein bis drei Ebenen verstellbar ist. Die Pedalplattform ist um eine radiale Achse, welche senkrecht zur Pedalachse steht, schwenk- und neigbar. Ausserdem kann die Plattform mittels eines Distanzmittels in der Höhe verstellt werden. Von Bedeutung ist jedoch, dass eine einmal eingenommene Position der Pedalplattform mittels Bolzen festgestellt wird, sodass während der Umdrehung des Pedals keine Beweglichkeit der Pedalplattform bezüglich der Pedalachse gegeben ist.

Die FR-A-2 661 651 zeigt ein Fahrradpedal, welches während seiner Umdrehung ein Kippen des Pedals ermöglicht. Die Pedalplattform ruht auf einem zentral angeordneten Lager, welches eine Drehung und ein Kippen des Pedals ermöglicht. Das Ausmass der Kippbewegung kann durch einen Konus, welcher auf die Pedalachse aufgeschraubt und auf dieser verstellbar angeordnet ist, eingestellt werden.

Aus der DE 3218290 ist darüber hinaus ein Pedaltrainingsgerät mit den Merkmalen des Oberbegriffes des Anspruchs 1 bekannt, welches zusätzlich zur Drehbewegung der Pedale eine Pedalbewegung um eine weitere Achse erlaubt, die senkrecht zur Pedalachse des am Ende eines Kurbelarms sitzenden Pedals verläuft, wodurch eine Schwenkbewegung in einem Winkel zur Längserstreckung der Pedale ermöglicht ist.

Der Stand der Technik erlaubt beispielsweise keine von der menschlichen funktionellen Anatomie geforderte Rotationsbewegung im Fersenbereich des Fusses, die zu einer Schwenk- Drehbewegung in der Fusslängsachse führt (frei oder erzwungen).

Es ist zwischenzeitlich bekannt, dass aufgrund der komplexen Struktur und Funktion der Beine und Füsse der menschliche Körper nicht kompatibel mit starr ablaufenden Bewegungen ist. In hohem Maße spielen diese Aspekte eine Rolle beim Fahrradfahren, einer Bewegungs- und Belastungsform mit vielfältigen adaptiven Anforderungen zur Abstimmung zwischen vom Radbau vorgegebenen konstruktiven Elementen die Zwangsbewegungen und -Haltungen abfordern und dem menschlichen Körper und dessen Kinematik, Statik und Funktionskonzept. Diese Stehen sich nach Meinung des Verfassers in erheblichem Maße konträr gegenüber. Ausser dem positiven Konditionierungs- und Muskeltrainingseffekt ist das Rad in seinen derzeitigen Bau -und Funktionselementen ein erheblicher Destruktor für den menschlichen Stützapparat.

### Funktionell ,morphologische Anforderung - Erklärung:

Während das Knie und der Fuß des Menschen bei angebeugtem Knie einen hohen Bewegungsspielraum, insbesondere in der Rotation und Stellung zueinander zulassen, verlangen sie im Zuge der Streckung und damit bei Last -und Kraftübernahme zunehmend nach einer Auswärtsdrehung des Fußes zum Knie. Die hierfür morphologisch geforderte Drehachse liegt im Bereich der Ferse. Gründe hierfür liegen unter anderem am Achsenskelett, an der bänderbedingten sog. Schlussrotation und insbesondere an der morphologischen Tibiatorsion von ca. 20 Grad.

### Aufgabe der Erfindung

Es ist deshalb Aufgabe der vorliegenden Erfindung, eine neue Tretmechanik bereitzustellen. Die Tretmechanik soll insbesondere eine sinnvolle, der funktionellen Anatomie und Morphologie des menschlichen Körpers besser entsprechende Lösung anbieten.

### Beschreibung

Erfindungsgemäss wird die Aufgabe durch eine Tretmechanik gemäss Oberbegriff von Anspruch 1 realisiert, bei welcher die Schuhauflage und der Support beweglich angeordnet sind, so dass bei einer Drehbewegung der Tretmechanik um die Pedalachse die Schuhauflage eine Schwenkbewegung relativ zum support vollführt. Als Längsachse wird jene Achse verstanden, welche in der Längserstreckung eines auf der Schuhauflage angeordneten Fusses verläuft. Die bewegliche Schuhauflagefläche hat den Vorteil, dass mindestens eine weitere für einen der Morphologie entsprechenden Bewegungsablauf nötige Bewegungsebene hinzukommt, d.h. der Fuss kann bei einer zirkulären Tretbewegung oder einer Streckbewegung der Beine eine den physiologischen Gegebenheiten entsprechend natürliche Position relativ zum übrigen Körper einnehmen (freie Bewegbarkeit). Im Weiteren hat die erfindungsgemäße Tretmechanik den Vorteil, dass der funktionell anatomischen Kinesiologie entsprochen wird und somit die üblichen Belastungsschäden in Knie und Sprunggelenken unterbleiben. Der Einsatz der erfindungsgemässen Tretmechanik lässt erstmals eine Schwenkbewegung in der Ebene der Schuhauflage zu.

Vorzugsweise verläuft die Schwenkbewegung entlang einer gekrümmten Bewegungsbahn. Eine Schwenkbewegung entlang einer gekrümmten Bahn, vorzugsweise mit einer Drehführung im Bereich der Ferse, ist physiologisch besonders vorteilhaft. Die gekrümmte Bahn kann beispielsweise einer kreisförmigen oder einer elliptischen Bahn entsprechen. Gemäss einer besonders bevorzugten Ausführungsform der Erfindung ist die Schuhauflage in einer Ebene, die parallel zur Pedalachse liegt, schwenkbar. Im Allgemeinen reicht diese Schwenkbarkeit der Schuhauflage aus, um den bekannten Beanspruchungsschäden entgegenzuwirken.

Gemäss einer bevorzugten Ausführungsform kann eine erzwungene Schwenkbewegung in der Ebene der Schuhauflage dadurch erzeugt werden, dass an der Pedalachse eine Nut in einer Kurvenbahnform und ann der Unterseite der Schuhauflage eine Nocke ausgebildet sind und die Nocke in der Nut kämmt. Es kann jedoch auch eine Hülse vorgesehen sein, in welcher die Kurvenbahn ausgebildet ist und welche auf die Pedalachse aufgesteckt und fixiert ist. Die Schuhauflage kann länglich ausgebildet sein, sodass sich der ganze Fuss darauf abstützen kann und darauf eingebettet sein kann.

Vorteilhaft ist die Schuhauflage mittels mindestens eines am Support vorgesehenen Schlitten-/Schienensystems in einer parallel zur Pedalachse verlaufenden Ebene entlang einer geraden oder gekrümmten Bewegungsbahn geführt. Dies ist eine einfache und zweckmässige Konstruktion, um der funktionellen Anatomie und Morphologie des menschlichen Körpers zu entsprechen. Eine Realisierungsmöglichkeit sieht vor, dass der Support eine Fersenstütze besitzt, an welcher die Schuhauflage im Fersenbereich drehbar, z.B. kugelgelenkartig, gelagert ist.

Die Bewegungsbahn des Schlittens kann in der Ebene der Schuhauflage gekrümmt sein (zweidimensional) und in einer speziellen Ausführungsform auch aus der Ebene der Schuhauflage heraus gekrümmt sein (dreidimensionale Bewegungsbahn). Im letzteren Fall vollführt der Fuss zusätzlich zur Schwenkbewegung auch eine Kippbewegung. Dies kann beispielsweise dadurch bewirkt werden, dass an der Pedalachse eine Kurvenbahn derart ausgebildet ist und mit der Schuhauflage in Verbindung steht, dass die Schuhauflage bei Drehbewegung des Supports um die Pedalachse eine Schwenkbewegung in der Ebene der Schuhauflage und aus dieser heraus vollführt. Beispielsweise kann eine kegelstumpfförmige Hülse mit einer Kurvenbahn an der Pedalachse drehfest angeordnet sein. In diesem Fall kann sich die Schuhauflage einerseits an der kegelstumpfförmigen Hülse bzw. der Kurvenbahn und andererseits an der Pedalachse abstützen.

Gemäss einer bevorzugten Ausführungsform ist am Support ein Schlitten hin- und her bewegbar angeordnet, welcher durch ein Getriebe, welches durch die mit der Tretkurbel drehfest verbundene Pedalachse angetrieben ist, im Betrieb hin- und her bewegt wird. Durch diese Konstruktion wird die Schuhauflage im Betrieb aktiv hin- und her bewegt. Eine mögliche Ausführungsform sieht vor, dass am Support zwei Führungsstäbe vorgesehen sind, auf welchen der Schlitten hin- und her bewegbar angeordnet ist, dass am Schlitten eine Nocke vorgesehen ist, welche in eine erste Führungsbahn an der mit der Tretkurbel fest verbundenen Pedalachse eingreift, dass auf dem Schlitten eine Schuhauflage drehbar gelagert angeordnet ist, und dass am Support eine zweite Führungsbahn vorgesehen ist, in welche ein an der Schuhauflage angeordneter Stift eingreift. Durch die beiden Führungsbahnen kann somit eine Schwenk- und Drehbewegung bewirkt werden.

Eine andere Ausführungsform sieht vor, dass am Support ein Winkelhebel schwenkbar angeordnet ist, welcher mit einem ersten Arm mit dem Schlitten und mit dem zweiten Arm mit einer mit der Pedalachse drehfest verbundenen Exzenterscheibe zusammenwirkt. Im Betrieb wird der Winkelhebel durch die Exzenterscheibe hin- und her geschwenkt und erzwingt somit eine entsprechende Bewegung des Schlittens und der darauf angeordneten Schuhauflage. Eine weitere Ausführungsform sieht vor, dass am Support ein Getriebe vorgesehen ist, welches von der mit der Tretkurbel drehfest verbundenen Pedalachse angetrieben ist, dass am Getriebe ein Bewegungswandler (Antriebsscheibe) vorgesehen ist, welches über ein Gestänge mit dem Schlitten in Verbindung steht. Durch das Getriebe wird die Roationsbewegung der Pedalachse in eine Hin- und Herbewegung des Schlittens umgesetzt. Dadurch, dass der Support nach hinten einen länglichen Fortsatz hat, an welchem ein mit dem Schlitten in Verbindung stehender Hebel drehbar angelenkt ist, kann der Schlitten entlang einer Kreisbahn hin- und herbewegt werden.

Gegenstand der vorliegenden Erfindung ist auch ein Fahrrad, Ergometer, oder sonstiges Therapie-, Rehabilitations-, oder Fitnessgerät zur aktiven und/ oder passiven Beugung und Streckung der Beine bzw. diese Bewegung beinhaltenden kombinierten Bewegungsabläufe insbesondere der in Folge dessen komplexen Bewegungsabläufe der Füße mit einer erfindungsgemässen Tretmechanik.

Vorteilhaft ist die Tretmechanik an einem Tretkurbelarm derart angeordnet ist, dass die Längsachse der Schuhauflage in der obersten Position des Tretkurbelarms sich im Wesentlichen parallel zu einer Ebene erstreckt, welche durch den sich drehenden Tretkurbelarm definiert ist, und in der untersten Position des Tretkurbelarms die Längsachse der Schuhauflage in einem Winkel zu dieser Ebene angeordnet ist, d.h. die Fussspitze zeigt zumindest in einer untersten Stellung nach aussen. Die Tretmechanik kann auch an einer bekannten Bewegungsschiene angeordnet sein. Vorzugsweise ist ein Bewegungswandler vorgesehen, welcher eine Streckbewegung in eine Rotation einer Pedalachse wandelt. Die rotierende Pedalachse kann dann eine Schwenkbewegung der Schuhauflage bewirken. Denkbar ist auch der Einsatz einer Hebelanordnung, welche beim Strecken des Beins eine Verschwenkung der Schuhauflage bewirkt.

Die Erfindung wird nachfolgend unter Bezugnahme auf die Figuren beispielhaft beschrieben. Es zeigt:
- Fig. 1: Eine perspektivische Ansicht eines Ausführungsbeispiels einer erfindungsgemässen Tretmechanik mit Pedal und Schuhauflage;
- Fig. 2: die Tretmechanik von Fig. 1 in Frontansicht;
- Fig. 3: die Tretmechanik von Fig. 1 in Seitenansicht;
- Fig. 4: die Tretmechanik von Fig. 1 in Draufsicht;
- Fig. 5a: Eine Draufsicht, teilweise im Schnitt, einer zweiten Ausführungsform der Tretmechanik mit einem Schlitten-/Schienensystem;
- Fig. 5b: Schematisch und im Querschnitt die Tretmechanik von Fig. 5;
- Fig. 6: Schematisch eine dritte Ausführungsform der Tretmechanik mit einer wannenförmig gekrümmten Bewegungsbahn
a) bei oberer Tretkurbelarmstellung und
b) bei unterer Tretkurbelarmstellung;
- Fig. 7: Eine Draufsicht auf eine vierte Ausführungsform der Tretmechanik mit einer auf einem Kegelstumpf angeordneten Kurvenbahn und einem Fersenstütze sowie einer teleskopartig verlängerbaren Pedalachse;
- Fig. 8: Eine fünfte Ausführungsform der Tretmechanik mit einer zweiteiligen Schuhauflagefläche und ohne Fersenstütze;
- Fig. 9a und b: Schematisch die Stellung der Schuhauflagefläche in verschiedenen Tretkurbelarmpositionen bei den Ausführungsformen gemäss den Figuren.7 und 8;
- Fig.10a: Schematisch eine sechste Ausführungsform einer Tretmechanik mit einem Schlitten-Schienensystem (nur Schienensystem dargestellt) mit zwei am Support angeordneten wannenförmig gekrümmten Pedalstützen mit einer Kurvenbahnform in der Ebene der Schuhauflage und einer wannenförmig gekrümmten Kurvenbahnform bezüglich der Ebene der Schuhauflage;
- Fig. 10b: Eine wannenförmig gekrümmter Pedalstütze gemäss Figur 10a;
- Fig. 11: eine Seitenansicht einer erfindungsgemässen Tretmechanik;
- Fig.12: eine Vorderansicht der Tretmechanik von Fig.11;
- Fig.13: eine Draufsicht auf die Tretmechanik von Fig.11;
- Fig.14: eine perspektivische Ansicht der Tretmechanik von Fig.11 von unten;
- Fig.15: eine perspektivische Ansicht der Tretmechanik von Fig.11 von oben;
- Fig.16: eine Draufsicht auf eine siebte Ausführungsform einer Tretmechanik mit einem hin- und her bewegbaren Schlitten und einer Zwangsführung zur Erzeugung einer Schwenkbewegung;
- Fig.17: eine Seitenansicht der Tretmechanik von Fig. 16
- Fig. 18: eine Vorderansicht der Tretmechanik von Fig. 16;
- Fig. 19: eine erste perspekivische Ansicht der Tretmechanik von oben;
- Fig. 20: eine zweite perspekivische Ansicht der Tretmechanik von oben;
- Fig. 21: die Tretmechanik von Fig.16 mit Schuhauflage in Draufsicht;
- Fig. 22: die Tretmechanik von Fig. 21 in Seitenansicht;
- Fig. 23: die Tretmechanik von Fig. 21 in Vorderansicht;
- Fig. 24: eine erste perspektivische Ansicht der Tretmechanik von Fig. 21;
- Fig. 25: eine zweite perspektivische Ansicht der Tretmechanik von Fig. 21;
- Fig. 26: eine achte Ausführungsform einer Tretmechanik in Draufsicht;
- Fig. 27: die Tretmechanik von Fig. 26 in Vorderansicht;
- Fig. 28: die Tretmechanik von Fig. 26 in Seitenansicht;
- Fig. 29: die Tretmechanik von Fig. 26 in perspektivischer Ansicht;
- Fig. 30: eine neunte Ausführungsform einer Tretmechanik in Draufsicht;
- Fig. 31: die Tretmechanik von Fig. 30 in Seitenansicht;
- Fig. 32: die Tretmechanik von Fig. 30 in einer perspektivischen Ansicht;
- Fig. 33: einen Schnitt der Tretmechanik entlang der Linie 33 - 33 von Fig. 32;
- Fig. 34: eine Rückansicht eine erfindungsgemässe Tretmechanik in der oberen Stellung der Tretkurbel
a) in Rückansicht
b) in Draufsicht.
- Fig. 35: eine Rückansicht eine erfindungsgemässe Tretmechanik in der unteren Stellung der Tretkurbel
a) in Rückansicht
b) in Draufsicht
- Fig. 36: Eine schematische Darstellung einer Bewegungsschiene, wie sie in der Rehabilitation in der orthopädischen Chirurgie eingesetzt wird.

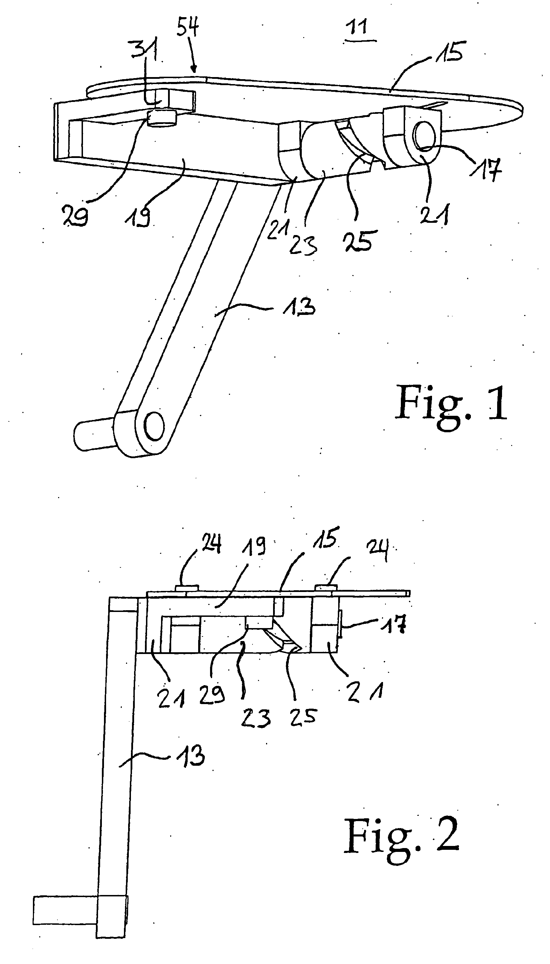

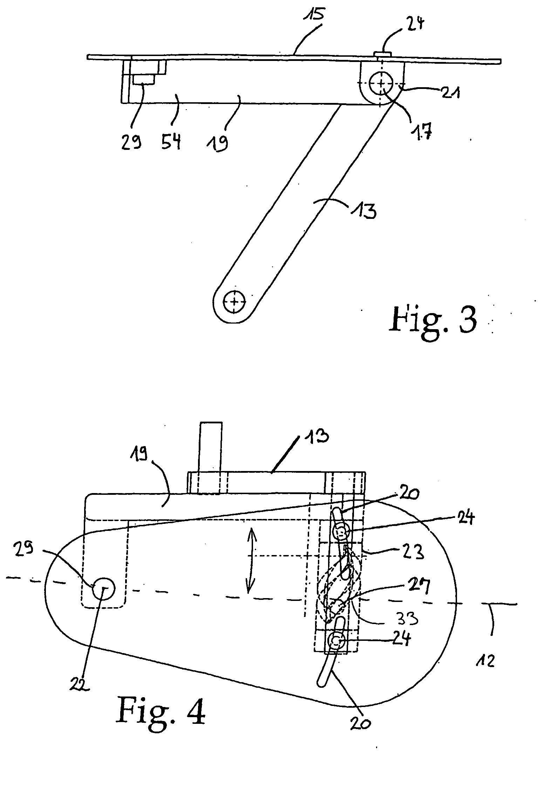

Die in den Figuren 1 bis 4 dargestellte erfindungsgemäße Tretmechanik 11 ist für die Montage an einem Tretkurbelarm 13 oder einem anderen Tretorgan, z. B. einem Fahrrad, Ergometer, Stepper etc. gedacht. Die Tretmechanik 11 besitzt einen Support 19, welcher beispielsweise an einer Pedalachse 17 drehbar gelagert ist und auf welchem eine Schuhauflage 15 angeordnet ist. Im Rahmen der vorliegenden Erfindung soll unter Support der gesamte Unterbau, auf dem die Schuhauflage angeordnet ist, bezeichnet werden. Die Schuhauflage besteht beispielsweise aus einer länglichen Platte, welche die Konturen eines Fusses haben kann (Fig. 4). Der Support 19 ist vermittels der Lagerbuchsen 21 drehbar an der Pedalachse 17 angeordnet. Im vorderen Bereich der Schuhauflage 15 sind zwei Führungsschlitze 20 vorgesehen (Fig. 4), welche auf einer Kurvenbahn mit der Drehführung 22 liegen. Die Schlitze 20 sind von je einer Schraube 24 durchsetzt. Die Schrauben 24 sind in den Support 19 eingeschraubt und führen und begrenzen, durch veränderbare Positionen, die Schwenkbewegung der Schuhauflage 15.

Gemäss der in den Figuren 1 bis 4 gezeigten bevorzugten Ausführungsform eines Pedals ist zwischen den Lagerbuchsen 21 auf der Pedalachse 17 eine Hülse 23 montiert. Im Mantel der Hülse 23 ist eine Kurvenbahn in Gestalt einer Führungsnut 25 vorgesehen. Die Hülse 23 ist mittels einer justierbaren Klemmeinrichtung, beispielsweise einer Stiftschraube (in der Figur nicht ersichtlich) drehfest mit der Pedalachse 17 verbunden. In die Führungsnut 25 greift eine Nocke 27 ein, welche an der Unterseite der Schuhauflage 15 vorgesehen ist. Über die Nocke 27 stützt sich die Schuhauflage 15 auf der Hülse 23, resp. der Pedalachse 17 ab. Im Fersenbereich ist die Schuhauflage 15 in einer zur Pedalachse 17 parallelen Ebene mittels eines Bolzens 29, welcher in eine Bohrung 31 im Support 19 eingreift, schwenkbar gelagert. In Figur 4 ist mit der Bezugsziffer 33 (unterbrochene Linie) der Verlauf der Kurvenbahn gezeigt.

Die erfindungsgemäße Tretmechanik funktioniert wie folgt: Beim Fahrradfahren wird der Tretkurbelarm angetrieben, wobei die drehfest mit dem Tretkurbelarm 13 verbundene Pedalachse 17 ebenfalls gedreht wird. Durch die Drehbewegung der Pedalachse 17 dreht sich auch die mit der Pedalachse 17 fest verbundene Hülse 23. Dabei erzwingt die Führungsnut 25 über die in der Führungsnut 25 geführte Nocke 27 eine seitliche Schwenkbewegung der Schuhauflage 15 entsprechend dem Verlauf der Kurvenbahn 25. Infolgedessen lässt sich für den Fuss eine kontinuierliche Positionsänderung erzielen. Bei nach oben positioniertem Tretkurbelarm zeigt die Fusslängsachse - bei angebeugtem Knie - nach vorne. Bein nach unten positioniertem Tretkurbelarm zeigt die Fusslängsachse - bei gestrecktem Knie - nach aussen. Durch miteinander kombinierte Achsenbewegungen lassen sich weiterhin anatomie- und kinesiologiekonforme Gelenkpositionen, wie z.B. Supinationsstellung bei angebeugtem Knie und Pronationsstellung des Fusses bei gestrecktem Knie realisieren und in bedarfsgerechte Bewegungskontinuität umsetzen. Lässt man die Hülse 23 weg, erhält man ein Pedal resp. eine Tretmechanik 11, welche es ermöglicht, dass die Füsse des Benutzers selbsttätig in die am besten geeignete Winkelstellung zum Körper geführt werden.,

Vorteilhaft ist die Schwenk-/Drehbewegung mit einer Neigungsbewegung der Pedalachse kombiniert. Diese Neigungsbewegung kann grundsätzlich auf die gleiche Art erfolgen, wie es im US Patent Nr. 5,199,324 beschrieben ist. Der Inhalt dieser Schrift wird hiermit mittels Bezugnahme aufgenommen. Im Unterschied zur US 5,199,324 ist das Pedal jedoch aus funktionell anatomischen Gesichtspunkten so an der Tretkurbel zu montieren, dass es in der obersten Position eine Neigung zum Boden hin und in der untersten Position eine Neigung vom Boden weg ausführt.

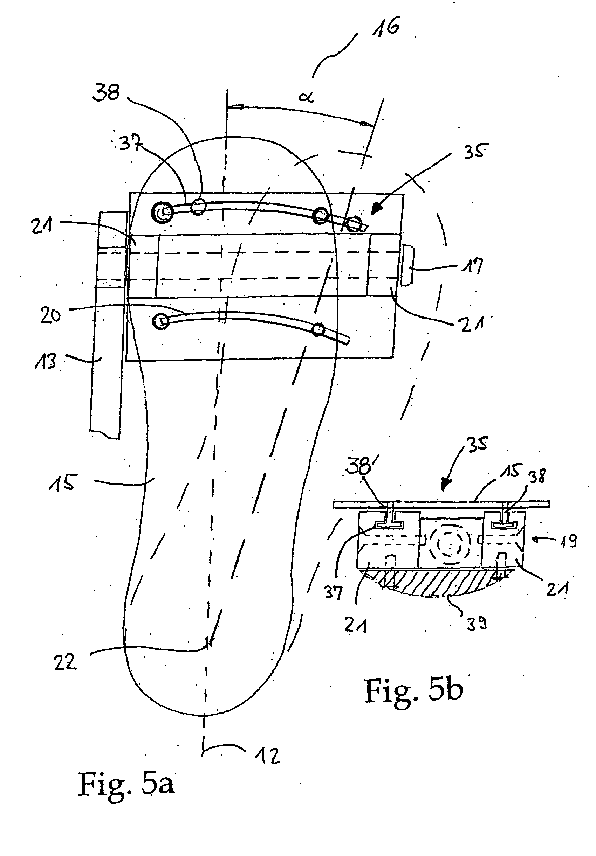

Gemäß einer anderen bevorzugten Ausführungsform der Erfindung ist die Schuhauflage ebenfalls um eine Achse 22, die im Fersenbereich liegt und rechtwinklig zur Pedalachse steht, schwenkbar. In der Figur 5a ist die Schuhauflage 15 über ein Schienen-Schlittensystem 35 an der Pedalachse 17 resp. an den Lagerbuchsen 21 angeordnet. Mindestens eine Führungsschiene oder Führungsnut 37, die beispielsweise einen Kreisumfangsausschnitt bildet, dessen Drehführung 22 im Bereich der Ferse liegt, läßt einen Schwenkbewegungsablauf zu. In die Führungsnut 37 greift ein Führungsorgan 38, z.B. ein Gleitbolzen oder dergleichen, ein. In der oberen senkrechten Tretkurbelarmstellung kann somit die Längsachse 12 der Schuhauflage parallel zur Ebene, in der sich der Tretkurbelarm bewegt, liegen. Von hier kann sie sich abwärts, quasi automatisch oder durch Bewegungsmuster geschult, in jedem Fall jedoch analog dem der Tibiatorsion geschuldeten Zwangsablauf, nach außen, d.h. aus der Ebene heraus, bewegen. In der unteren senkrechten Tretkurbelarmstellung kann somit die Fußspitze maximal nach außen zeigen. Die Bewegungsübergänge sind fließend. Der Schwenkwinkel α (in Fig. 5a mit Bezugsziffer 16 bezeichnet) wird durch die sich verändernden Lagepositionen der Fusslängsachse 12 in der Schwenkebene gebildet. Im Gegensatz zum gezeigten Ausführungsbeispiel ist auch denkbar, dass die Führungsnut 37 an der Unterseite der Schuhauflage 15 und das Führungsorgan am Support vorgesehen ist.

Fig. 5b zeigte die in Figur 5a dargestellte Schienen - Schlittenlösung 35 im Schnitt. Gegenüberliegend der Schuhauflage 15 ist an der Tretmechanik 11 eine Einrichtung zum Erzeugen einer schwerpunktgerechten, vorbestimmt gewünschten Stellung der Schuhauflagefläche vorgesehen. Diese Einrichtung kann z.B. in Gestalt einer unterseitig angebrachten Gewichtsform 39 vorliegen. Die Gewichtsform 39 bewirkt, dass die Schuhauflage 15 nach oben zeigt und in eine waagrechte oder nahezu waagrechte Lage tendiert.

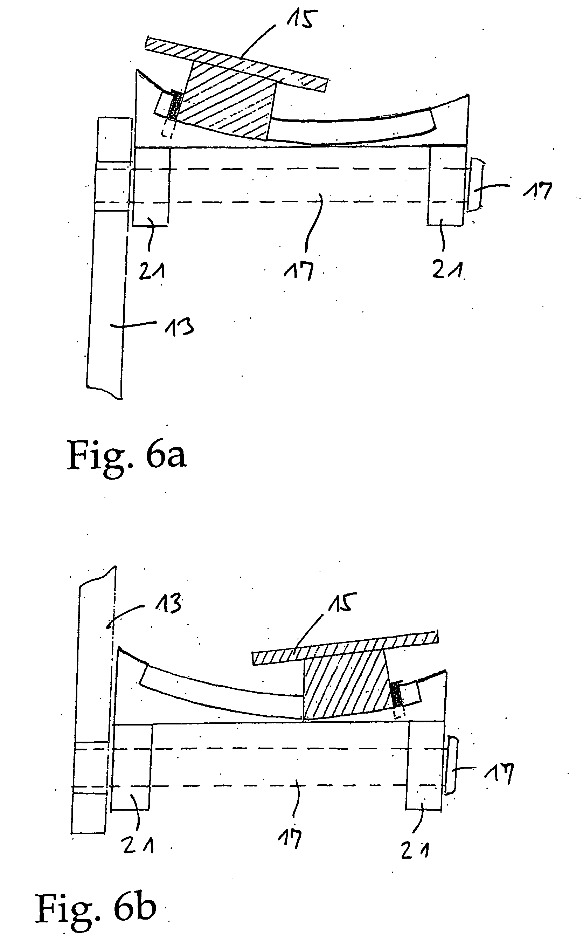

Gemäß einer Weiterentwicklung der Ausführungsform nach Fig. 5a und b ist die Schiene resp. sind die Schienen zusätzlich konvex gewölbt (Figur 6a). Die Schuhauflage 15 kann nunmehr kombinierte Bewegungen ausführen. Fig.6a zeigt die mögliche Position der Schuhauflage 15, wenn der Tretkurbelarm 13 nach oben zeigt. Fig.6b zeigt die mögliche Position der Schuhauflage, wenn der Tretkurbelarm 13 nach unten zeigt. Grundsätzlich kann jedoch auch die Schienen - Schlittenlösung zwischen Schuh und Schuhauflagefläche ausgebildet sein.

Die erfindungsgemässe Tretmechanik hat folgende Vorteile: Die an sich bekannte Drehbewegung des Pedals um die Pedalachse (gewährleistet Dorsalextension und Plantarflexion des Fußes im oberen Sprunggelenk) wird ergänzt durch eine Schwenkbewegung in der Ebene der Schuhauflagefläche (gewährleistet die Rotationsanforderung durch die Tibiatorsion) und kann zusätzliche durch eine Verkantbewegung ergänzt werden. Diese uneingeschränkte Bewegungsfreiheit erlaubt erstmalig eine Supinations- und Pronationsbewegung des unteren Sprunggelenkes.
Die Achse dieser "Maulschellenbewegung" verläuft analog der des unteren Sprunggelenkes.

Diese weiter entwickelte Ausführungsform der Tretmechanik erfüllt somit den Charakter eines mindestens dreiachsigen Gelenkes, das dem Fuss erlaubt, eine beliebige Stellung im Raum einzunehmen. Gelenkbewegungen in einer Ebene können begleitet werden von akzessorischen Bewegungen in den übrigen Ebenen. Einachsige Bewegungen können in kombinierte und komplexe Bewegungen überführt werden.

Die Ausführungsformen der Erfindung nach den Figuren 5a und b und/ oder Figuren 6a und b können eine Fersenstützkonstruktion analog den Figuren 1 bis 4 aufweisen, die drehbar resp. kugelgelenkartig gelagert sein kann.

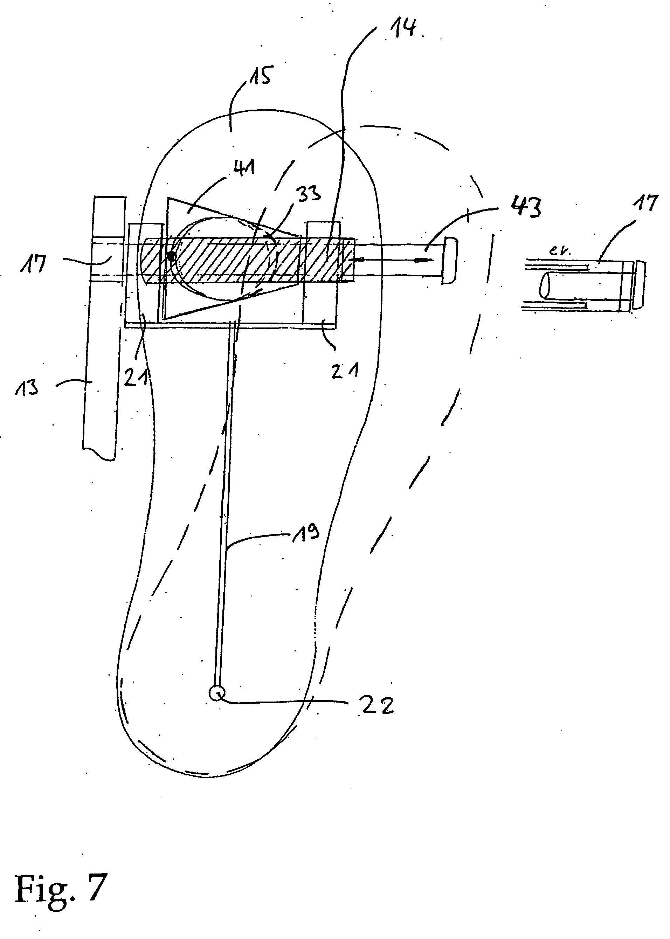

Die Ausführungsform gemäss Figur 7 sieht vor, dass die Pedalachse 17 und die Tretmechanik 11 derart miteinander gekoppelt sind, dass bei einer Drehung um die Pedalachse 17 die Tretmechanik 11 resp. die Schuhauflage 15 eine Schwenkbewegung und zusätzlich eine Verkantbewegung aus der Ebene der Schwenkbewegung heraus vollführt. Ein solches Bewegungsmuster des Pedals resp. der Schuhauflage kann mittels einer an der Pedalachse oder an der Unterseite der Schuhauflage ausgebildete Kurvenbahn 33 realisiert werden, die auf einem Kegelstumpf 41 vorgesehen ist. Die Schuhauflage 15 kann sich dabei einerseits über einen Abstützbügel 14 oder direkt auf der Kurvenbahn 33 resp. dem Kegelstumpf 41 abstützen, andererseits ebenso über den Abstützbügel 14 oder direkt auf einer teleskopartig verschiebbaren Lagerbuchse 43, die auf oder in der Pedalachse 17 laufen kann.

Ist die Schuhauflage 15 einteilig ausgebildet, ergibt sich somit eine Neigung der gesamten Schuhauflage. Ist die Schuhauflage zwei- oder mehrteilig kann eine Neigung nur des Vorfusses erreicht werden.

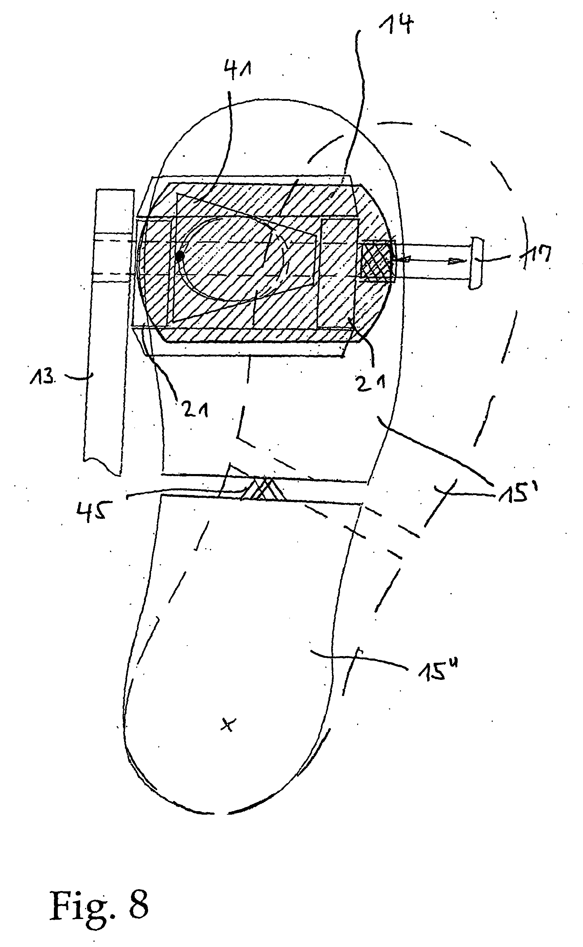

Fig. 8 zeigt eine zur Ausführungsform von Fig. 7 modifizierte Tretmechanik ohne Fersenstützkonstruktion, bei welcher die Schuhauflage zweiteilig ausgebildet ist. Zwischen dem vorderen und dem hinteren Teil der Schuhauflagefläche 15' resp. 15" ist ein elastisches Verbindungselement 45 vorgesehen.

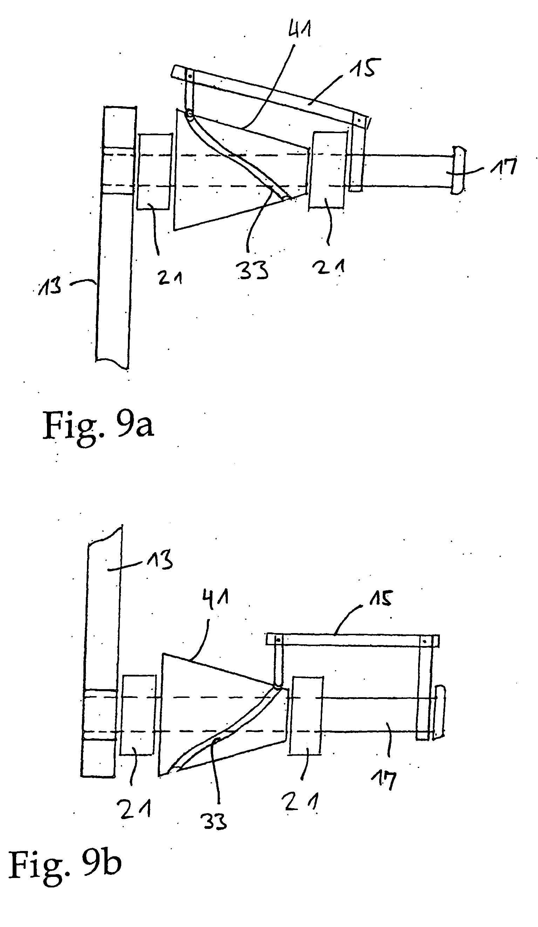

Die Figuren 9a und b zeigen die neuartige Tretmechanik an einer Tretkurbel montiert in zwei verschiedenen Stellungen.

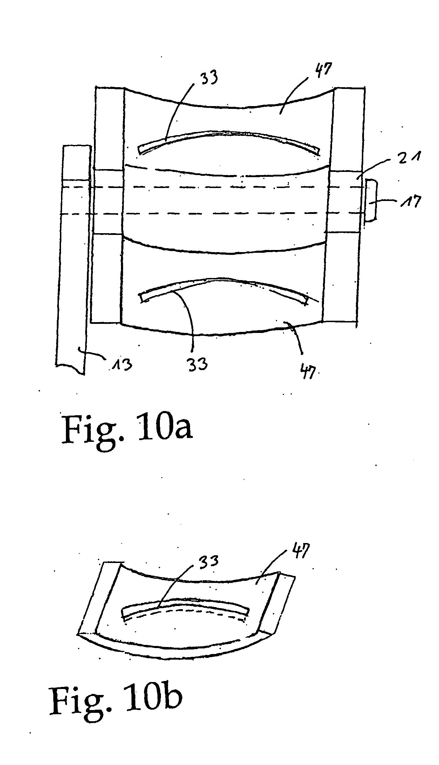

Die Figuren 10a und 10b zeigen eine Tretmechanik mit einem Schlitten-Schienensystem (nur Schienensystem dargestellt) mit zwei an der Tretmechanik vorgesehenen, im Schnitt wannenförmigen Pedalstützen 47, an deren Innenseite eine Führungsnut 33 eingearbeitet ist. Die Führungsnut 33 verläuft so, dass eine Schwenkbewegung in einer zur Pedalachse 17 parallelen Ebene und eine Verkantbewegung aus dieser Ebene heraus ermöglicht ist. Bei der Verschiebung der Schuhauflage 15 von einer Extremposition in die andere, in welcher die Schuhauflage gekippt ist, durchläuft diese also ein Tal, in welcher die Schuhauflage parallel zur Pedalachse verläuft.

Es ist grundsätzlich denkbar, die Schwenkbewegung und/ oder Verkantbewegung der Schuhauflagefläche durch ein Kurven- und/ oder Koppelgetriebe zu bewerkstelligen. Das Getriebe und/oder die Getriebekombinationen können als Verbindungsglieder zwischen Tretkurbel, Tretkurbelarm, Pedalachse, Support und Fussauflagefläche positioniert sein und/oder in beliebigem Zusammenspiel ausgebildet und positioniert sein.

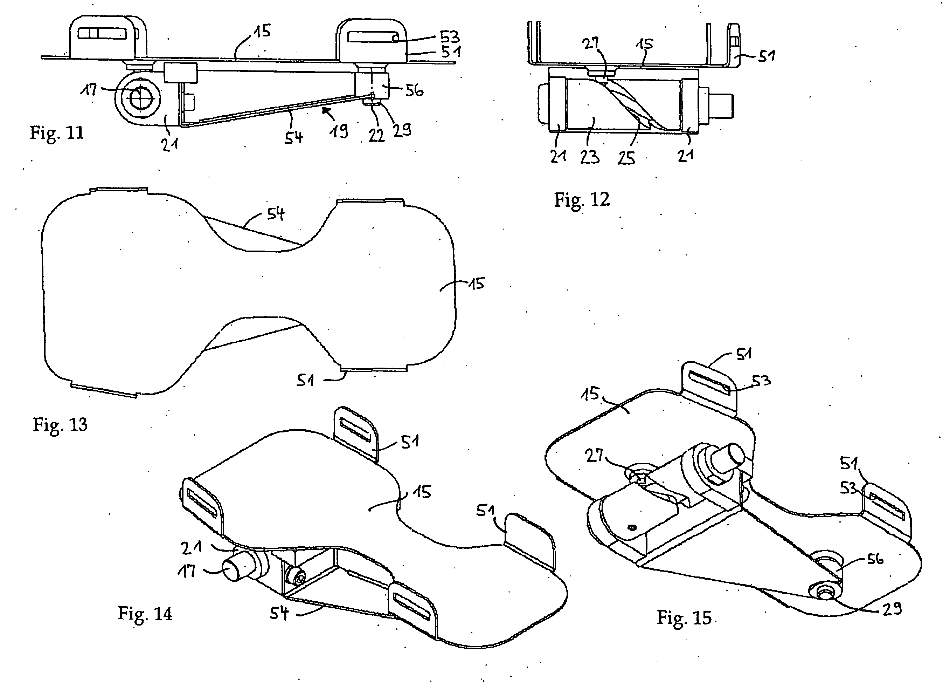

Die in den Figuren 11 bis 15 dargestellte Tretmechanik entspricht einer kommerziellen Ausführungsform der Tretmechanik der Figuren 1 bis 4. Seitlich an der Schuhauflage 15 sind Ohren 51 mit Schlitzen 53 vorgesehen, welche der Befestigung eines Schuhs mit Hilfe von nicht gezeigten Riemen dienen. Eine Fersenstütze 54 dient der Abstützung der Schuhauflage 15 im Fersenbereich. Die Fersenstütze 54 ist mit dem ersten Ende an den Lagerbuchsen 21 angeordnet mit dem zweiten Ende mit der Schuhauflage gelenkig verbunden (Drehpunkt 22). Ein Bolzen 29, welcher in einer. Hülse 56 drehbar gelagert ist, ermöglicht das Verschwenken der Schuhauflage 15 entlang einer Kurvenbahn.

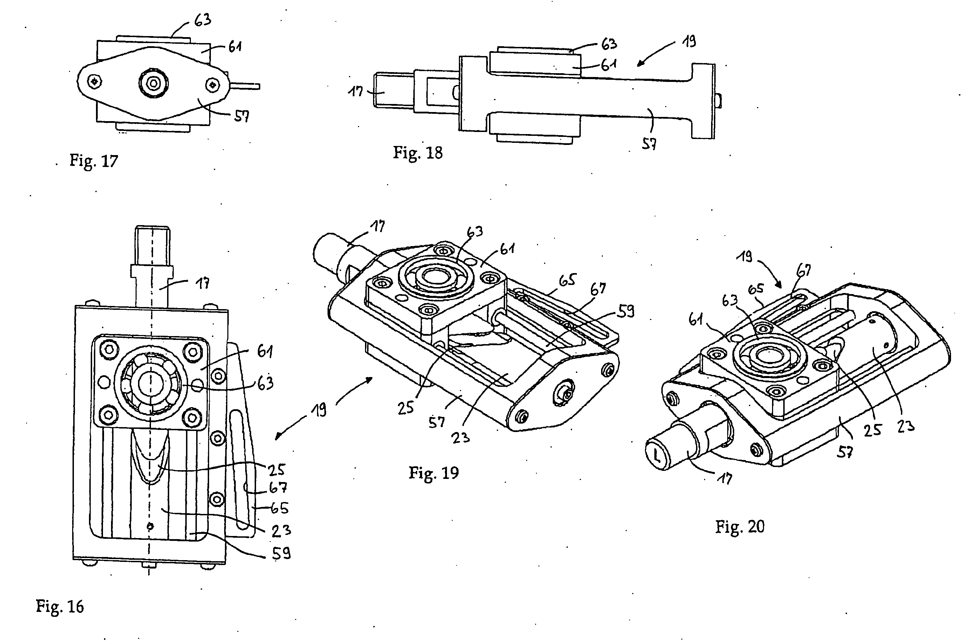

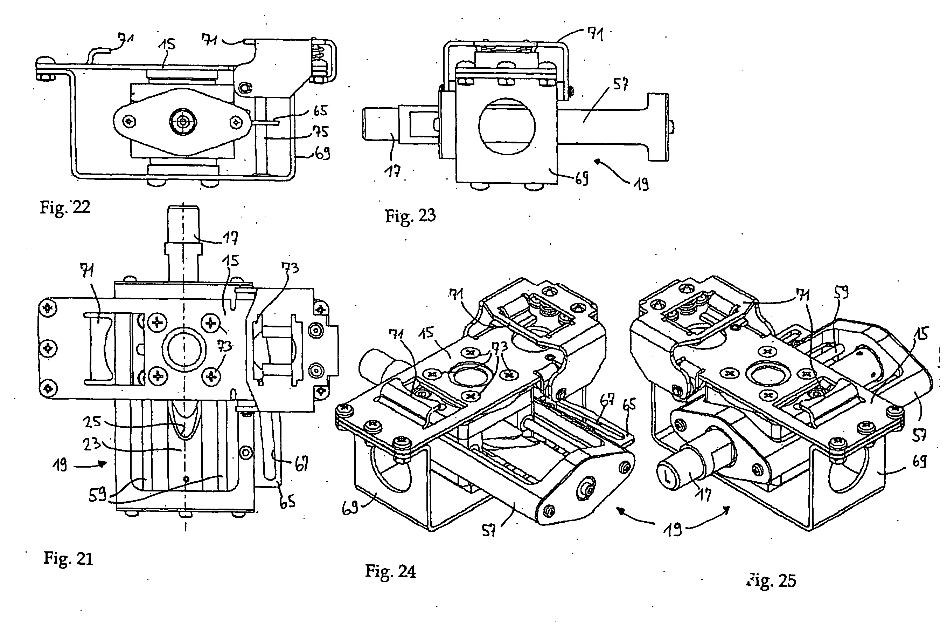

Die Tretmechanik 11 gemäss den Figuren 16 bis 25 zeigt eine weitere Art, wie eine Verschwenkung der Schuhauflage 15 relativ zur Pedalachse 17 realisiert werden kann. Die Tretmechanik 11 besitzt einen Support 19 bestehend aus einem Rahmen 57, an welchem zwei Führungsstäbe 59 parallel zur Pedalachse 17 angeordnet sind. Auf den Führungsstäben 59 ist ein Schlitten 61 hin- und her beweglich angeordnet. Auf dem Schlitten 61 ist ein Kugellager 63 zur Aufnahme einer Schuhauflage 15 vorgesehen. An der Unterseite des Schlittens 61 ist - analog zu bereits weiter oben diskutierten Ausführungsformen - ein (in den Figuren nicht ersichtlicher) Bolzen 29 vorgesehen, welcher in die Führungsbahn 25 der Hülse 23 eingreift. Dadurch wird bei einer Drehung der Hülse 23 relativ zum Support der Schlitten 61 hin- und her bewegt. An der Vorderseite des Rahmens 57 ist ein über einen Teil der Supportbreite sich erstreckender Vorsprung 65 mit einem Schlitz 67 vorgesehen. Der Schlitz 67 dient dabei als Zwangsführung für die bewegliche Schuhauflage 15 und zur Erzwingung einer kombinierten Schwenk- und Drehbewegung der Schuhauflage 15 relativ zur Pedalachse 15, wie dies nachfolgend noch näher erklärt wird. Durch Weglassen der Hülse 23 erhält man eine Tretmechanik, welche es ermöglicht, dass die Füsse des Benützers selbsttätig in die am besten geeignete Winkelstellung zum Körper geführt werden.

Der mit der Bezugsziffer 19 bezeichnete Support dient ganz allgemein der Aufnahme der Schuhauflage 15. Die Schuhauflage 15 ruht auf dem drehbaren Kugellager 63 und ist daher relativ zum Support drehbar. Die Schuhauflage 15 besitzt einen U-förmigen Bügel 69, welcher Vorder- und Hinterteil der Schuhauflage 15 verbindet. Auf der Schuhauflage befindet sich weiter eine bekannte Klickeinrichtung 71, welche der lösbaren Befestigung eines heutzutage verwendeten Fahrradschuhs dient. Die Schuhauflage 15 ist vermittels 4 Schrauben 73 mit dem Kugellager 63 verbunden. An der Unterseite der Schuhauflage 15 befindet sich ein Stift 75, welcher sich durch den Schlitz 67 erstreckt.

Diese Tretmechanik funktioniert wie folgt: Bei einer Drehung der Tretmechanik um die Pedalachse wird der Schlitten 61 hin und her bewegt. Die auf dem Schlitten 61 angeordnete Schuhauflage 15 ist durch den Stift 75 im Schlitz 67 geführt. Da der Schlitz 67 in einem Winkel zur Pedalachse 17 verläuft, muss sich die Schuhauflage 15 zwangsläufig verschwenken, wenn sie in Richtung der Pedalachse verschoben wird. Grundsätzlich kann die durch den Schlitz 67 beschriebene Bahn geradlinig oder auch gekrümmt verlaufen.

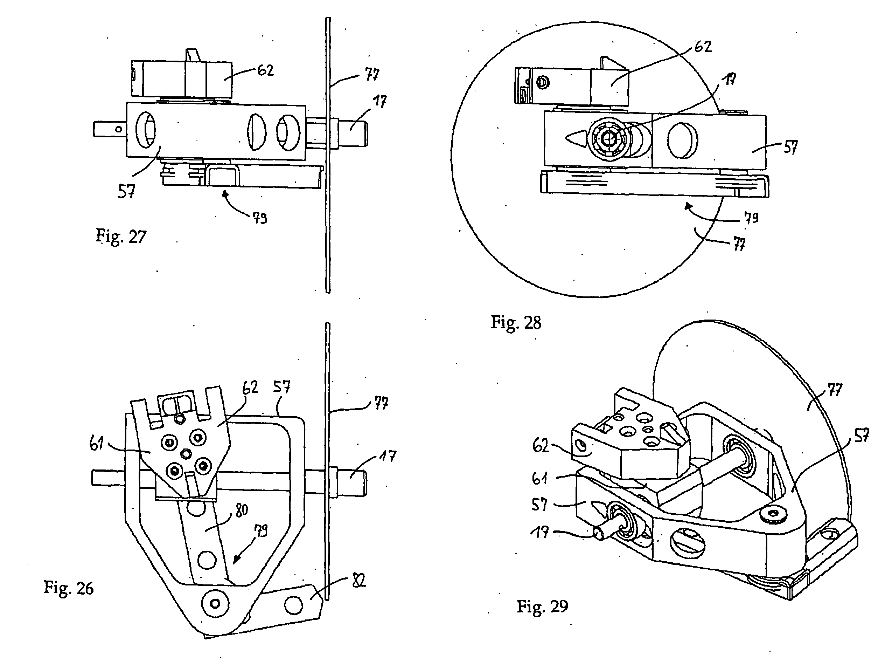

Die Tretmechanik der Figuren 27 bis 29 besitzt eine Exzenterscheibe 77, welche drehfest an der Pedalachse 17 angeordnet ist. Ähnlich der vorigen Ausführungsform ist auch hier ein Schlitten 61 vorgesehen, welcher beweglich auf der Pedalachse 17 angeordnet ist. Ein Winkelhebel 79 ist um eine Drehachse 22 drehbar, welche durch den Rahmen 57 verläuft. Der eine Arm 80 des Winkelhebels 79 steht mit dem Schlitten 61 und einem auf dem Schlitten 61 angeordneten Aufnehmer 62 in Verbindung, und der andere Arm 82 des Winkelhebels 79 wirkt mit dem Kreisumfang der Exzenterscheibe 77 zusammen. Der Aufnehmer 62 dient der Aufnahme einer Schuhauflage. Bei einer Umdrehung der Tretmechanik wird der Winkelhebel 79 und damit der Aufnehmer entsprechend dem variablen Radius der Exzenterscheibe 77 um die Drehachse 81 verschwenkt.

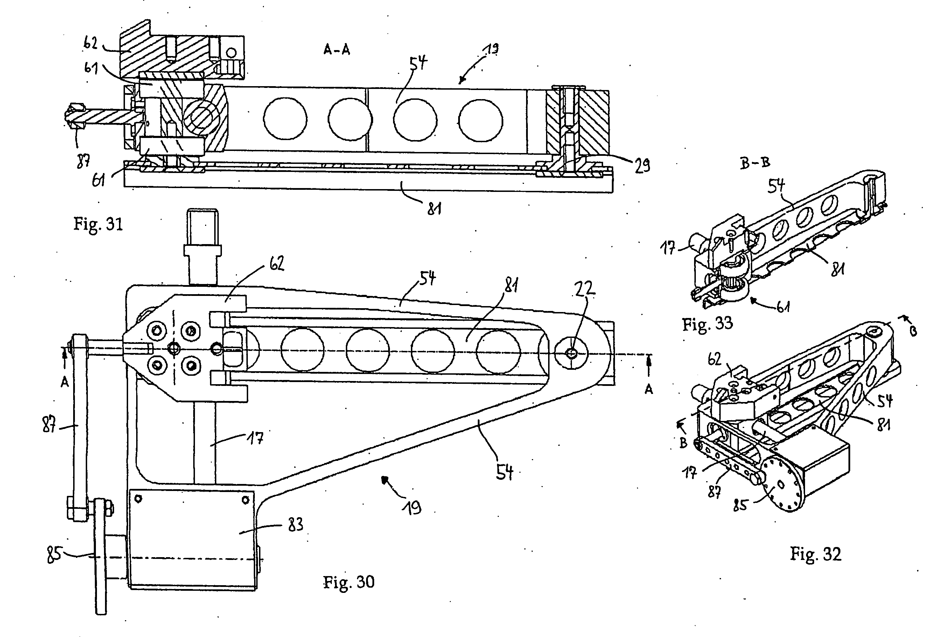

Die Ausführungsform der Figuren 30 bis 33 unterscheiden sich von den bisherigen darin, dass ein kleines Getriebe 83 vorgesehen ist. Dabei treibt die Pedalachse 17 über nicht gezeigte Getriebeelemente einen Bewegungswandler 85 an, welcher über ein Gestänge 87 mit dem Schlitten 61 in Verbindung steht. Durch den Bewegungswandler 85 wird der Schlitten 61 auf der Pedalachse 17 hin- und her bewegt. Der Aufnehmer 62 ist mit einem Hebel 81 drehfest verbunden, welcher am hinteren Ende der Fersenstütze 54 angelenkt und um den Drehpunkt 22 drehbar ist. Dadurch wird durch das Getriebe 83 nicht nur eine Hin- und Herbewegung erzeugt, sondern auch eine Drehung des Aufnehmers um den Drehpunkt 22 bewirkt.

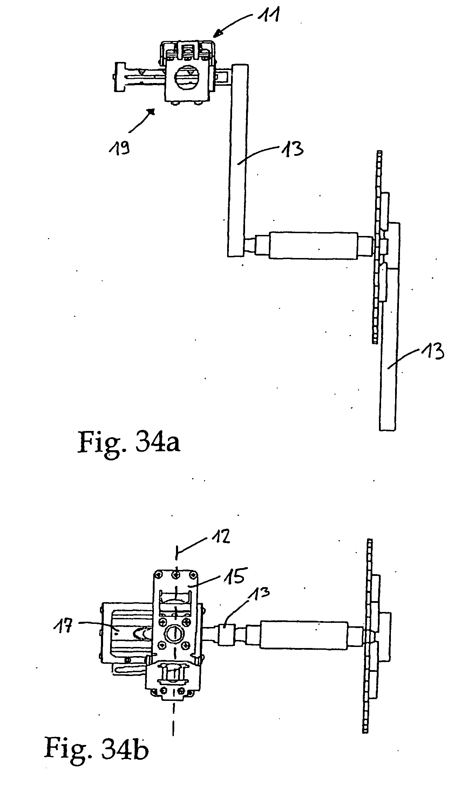

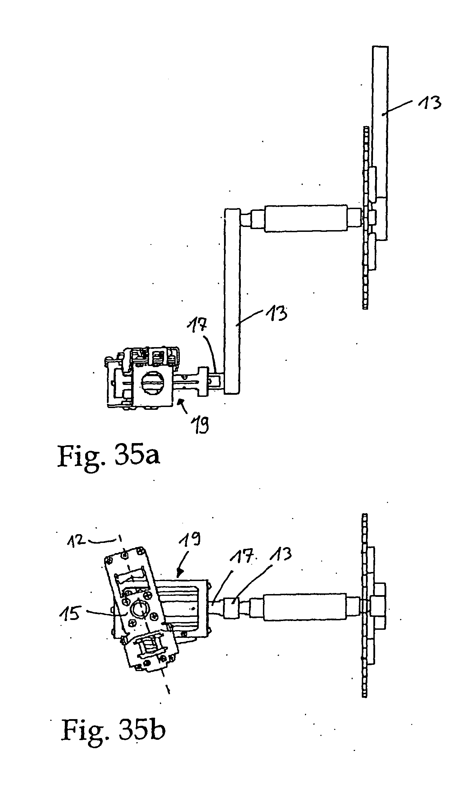

Die Figuren 34 und 35 zeigen eine erfindungsgemässe Tretmechanik gemäss den Figuren 16 bis 25 an einem Tretkurbelarm eines Fahrrads montiert. Gezeigt sind zwei Extremstellungen, eine obere Stellung des linken Tretkurbelarms (Figuren 34a und 34b) und eine untere Stellung des linken Tretkurbelarms (Figuren 35a und 35b). Deutlich erkennbar ist, dass in der oberen Stellung des Tretkurbelarmes die Längsachse der Schuhauflage 15 sich parallel zu einer Ebene erstreckt, welche durch den sich drehenden Tretkurbelarm definiert ist. In der unteren Stellung des Tretkurbelarmes hat die Längsachse der Schuhauflage 15 eine Schwenkbewegung nach aussen vollzogen.

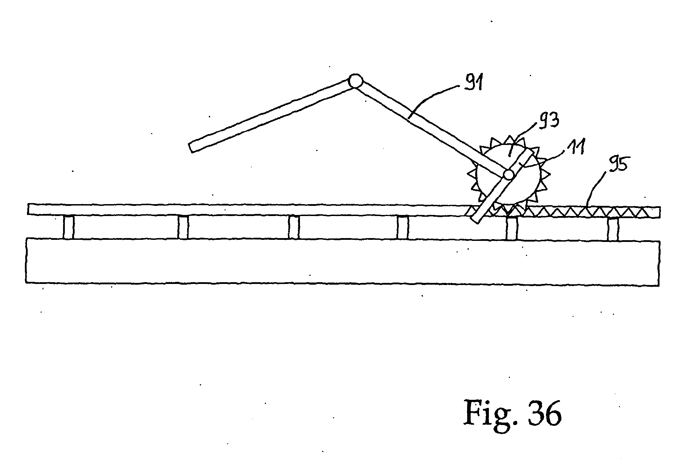

Die Figur 36 zeigt den Einsatz der erfindungsgemässen Tretmechanik in Verbindung mit einer Bewegungsschiene 91. Während bei der herkömmlichen Bewegungsschiene der Fuss bei Beugung und Streckung des Beines feststeht, wird bei der Verwendung der erfindungsgemässen Tretmechanik eine Beweglichkeit des Fusses erreicht. Eine physiologische Schwenkbewegung des Fusses kann stattfinden. Die Bewegungsschiene kann im Fussbereich einen Getriebemechanismus, hier beispielhaft durch Zusammenspiel von Zahnrad 93 und Zahnstange 95 gezeigt, aufweisen. Durch einen solchen Getriebemechanismus kann auch eine Schwenkbewegung des Fusses erzwungen werden.

Das Ausmass der einzelnen Bewegungen und deren Zusammenspiel kann bei allen erfindungsgemäßen Ausführungsformen über entsprechende Baumodule, durch deren Herstellung und Auswahl, festgelegt und begrenzt werden. Die einzelnen Baumodule sind bedarfgerecht anpassbar, einstellbar, austauschbar und kombinierbar.

Gewünschte Einstellungen und Abläufe können während der Nutzung variabel vollzogen werden. Vorzugsweise sind zwischen der Schuhauflage und dem Schuh Fixationsmittel zur lösbaren Befestigung vorgesehen. Die Fixationsmittel können durch Riemen, netzartige Umhüllungen, eine Schnappverbindung oder dergleichen gebildet sein. Die Fixationsmittel können bekannte Verbindungssysteme sein, wie sie beispielsweise bei Fahrrädern Verwendung finden.

Vorteilhaft ist ein Distanzstück zur befestigungsseitigen Verlängerung der Pedalachse vorgesehen ist. Dies hat den Vorteil, dass der "Spurbreite" der Beinstellung besser entsprochen werden kann. Die Schuhauflagefläche kann in der Grösse der gesamten Fusssohle entsprechen.

In einer bevorzugten Ausführung hat die erfindungsgemässe Tretmechanik eine Schuhauflagefläche, die der Grösse üblicher Vorderfusspedalen entspricht.

Die Schuhauflage kann für alle erfindungsgemäßen Ausführungsformen mit oder ohne Fersensupport ausgebildet und ein - zwei - oder - mehrteilig sein. Bei einer Zwei-oder Mehrteiligkeit sind die Teile bevorzugt elastisch miteinander verbunden. Die Schuhauflage kann den anatomischen Anforderungen entsprechend ausgebildet sein und beispielsweise Orthesefunktion haben.

Zur Gesunderhaltung des aktiven und passiven Bewegungsapparates ist es nicht nur nötig, diesen ausreichend zu bewegen, sondern es ist insbesondere auch der struktur-, funktions- und achsenkonformen Belastung Beachtung zu schenken:

Durch ein bedarfsgerechtes, funktionell morphologisches Bewegungsangebot können herkömmliche schädliche Bewegungsmuster korrigiert werden. Ausserdem können auch bestimmte Mobilitätsrichtungen verstärkt werden und beabsichtigte Bewegungsumfänge und -grenzen realisiert werden. Bewegungsabläufe können befundgerecht gefördert, kontrolliert und reproduziert werden. Eine passive Bewegungsausführung kann sicherer realisiert werden. Sind angestrebte Bewegungsmuster erreicht, bzw. verfügt der Proband über ausreichende koordinative Fähigkeiten, kann auf eine Zwangsführung verzichtet werden. Diese Aspekte, die benannten Bewegungsabläufe betreffend, werden durch die vorliegende Erfindung erstmals realisierbar.

### Bezugsziffern

- 11: Tretmechanik (Pedal)
- 12: (Fuss-)Längsachse der Schuhauflage
- 13: Tretkurbelarm
- 14: Abstützbügel
- 15a -: Schuhauflage
- 16: Schwenkwinkel der Schuhauflage
- 17: Pedalachse
- 19: Support
- 20: Führungsschlitze
- 21: Lagerbuchsen
- 22: Drehführung der Kreisbahn
- 23: Hülse
- 24: Schrauben
- 25: Führungsbahn
- 27: Nocke
- 29: Stift
- 31: Bohrung
- 33: Kurvenbahn der Hülse 23
- 35: Schienen-Schlittensystem
- 36: Anschläge
- 37: Führungsschiene
- 38: Führungsorgan
- 39: Gewichtform
- 41: Kegelstumpf
- 43: Lagerbuchse
- 45: Elastisches Verbindungselement
- 47: Pedalstützen

- 51: Ohren
- 53: Schlitze
- 54: Fersenstütze
- 55: Support
- 56: Hülse
- 57: Rahmen
- 59: Führungsstäbe
- 61: Schlitten
- 62: Aufnehmer
- 63: Kugellager
- 65: Vorsprung
- 67: Schlitz
- 69: U-förmiger Bügel
- 71: Klickeinrichtung
- 73: Schrauben
- 75: Stift
- 77: Exzenterscheibe
- 79: Winkelhebel
- 80: Erster Arm des Winkelhebels
- 81: Hebel
- 82: Zweiter Arm des Winkelhebels
- 83: Getriebe
- 85: Bewegungswandler
- 91: Bewegungsschiene
- 93: Zahnrad
- 95: Zahnstange

## Patentansprüche

1. Tretmechanik zur Verwendung an einem Fahrrad, Ergometer, oder sonstigen Therapie-, Rehabilitations-, oder Fitnessgerät, die Anwendung findet bei der aktiven und/oder passiven Beugung und Streckung der Beine zur aktiven und/oder passiven Beugung und Streckung der Beine bzw. diese Bewegung beinhaltenden kombinierten Bewegungsabläufe insbesondere der in Folge dessen komplexen Bewegungsabläufe der Füße, mit
- einem Support (19) und
- einer auf dem Support (19) angeordneten Fuß- oder Schuhauflage (15),
- wobei die Schuhauflage (15) in einem Winkel zur Längsstreckung (12) der Schuhauflage (15) schwenkbeweglich auf dem Support (19) angeordnet ist,
**dadurch gekennzeichnet,**
**dass** eine Pedalachse (17) vorgesehen ist, und die Schuhauflage (15) und der Support (19) derart miteinander gekoppelt sind, dass bei einer Drehbewegung der Tretmechanik um die Pedalachse (17) die Schuhauflage (15) eine Schwenkbewegung relativ zum Support (19) vollführt.

2. Tretmechanik nach Anspruch 1, **dadurch gekennzeichnet, dass** die Schwenkbewegung einer gekrümmten Bewegungsbahn entspricht.

3. Tretmechanik nach Anspruch 1 oder 2, **dadurch gekennzeichnet, dass** eine Pedalachse (17) vorgesehen ist, und die Schuhauflage (15) und der Support (19) derart miteinander gekoppelt sind, dass bei einer Drehbewegung der Tretmechanik um die Pedalachse (17) die Schuhauflage (15) eine Dreh- und Schwenkbewegung relativ zum Support (19) durch eine Drehbewegung senkrecht zur Ebene der Schuhauflage (15) und eine Schwenkbewegung in der Ebene der Schuhauflage (15) vollführt.

4. Tretmechanik nach Anspruch 1, **dadurch gekennzeichnet, dass** die Schuhauflage (15) in einer Ebene, die parallel zur Pedalachse (17) liegt, schwenkbar ist.

5. Tretmechanik nach einem der Ansprüche 1 bis 4, **dadurch gekennzeichnet, dass** an der Pedalachse (17) und der Schuhauflage (15) miteinander zusammenwirkende Führungsmittel (25, 27) derart ausgebildet sind, dass bei einer Drehung der Tretmechanik die Schuhauflage (15) mindestens eine Schwenkbewegung in der Ebene der Schuhauflage (15) vollführt.

6. Tretmechanik nach einem der Ansprüche 1 bis 5, **dadurch gekennzeichnet, dass** an der Pedalachse (17) eine Nut oder Führungsbahn (25) und an der Schuhauflage (15) eine Nocke (27) ausgebildet sind und die Nocke (27) in der Führungsbahn kämmt.

7. Tretmechanik nach einem der Ansprüche 1 bis 6, **dadurch gekennzeichnet**, das eine Hülse (23) vorgesehen ist, welche auf die Pedalachse (17) aufgesteckt und positionierbar ist und in welcher die Kurvenbahn (25) ausgebildet ist.

8. Tretmechanik nach einem der Ansprüche 1 bis 7, **dadurch gekennzeichnet, dass** die Schuhauflage (15) mittels mindestens eines an der Tretmechanik vorgesehenen Schlitten-/Schienensystems in einer parallel zur Pedalachse (17) verlaufenden Ebene entlang einer Bewegungsbahn geführt ist.

9. Tretmechanik nach Anspruch 8, **dadurch gekennzeichnet, dass** die Bewegungsbahn einer Kurvenbahn entspricht, deren Drehführung im Bereich der Ferse liegt.

10. Tretmechanik nach Anspruch 9, **dadurch gekennzeichnet, dass** die Bewegungsbahn einer Kurvenbahn entspricht, deren Drehführung im Bereich der Ferse liegt und die Bewegungsbahn zusätzlich konvex gekrümmt ist.

11. Tretmechanik nach einem der Ansprüche 1 bis 10, **dadurch gekennzeichnet, dass** am Support (19) zwei Führungsstäbe vorgesehen sind, auf welchen der Schlitten hin und her bewegbar angeordnet ist, dass am Schlitten eine erste Nocke vorgesehen ist, welche in eine erste Führungsbahn an der Pedalachse eingreift, dass auf dem Schlitten eine Schuhauflage drehbar gelagert angeordnet ist, und dass am Support (19) eine zweite Führungsbahn vorgesehen ist, in welche ein zweiter an der Schuhauflage angeordneter Stift (75) eingreift.

12. Tretmechanik nach einem der Ansprüche 1 bis 10, **dadurch gekennzeichnet, dass** am Support (19) ein Getriebe (83) vorgesehen ist, welches von der Pedalachse angetrieben ist, dass am Getriebe (83) ein Bewegungswandler (85) vorgesehen ist, welches über ein Gestänge (87) mit dem Schlitten (61) in Verbindung steht.

13. Tretmechanik nach einem der Ansprüche 1 bis 10, **dadurch gekennzeichnet, dass** der Support (19) nach hinten eine Fersenstütze (54) ausgebildet hat, an welcher ein mit dem Schlitten (61) in Verbindung stehender Hebel (81) drehbar angelenkt ist.

14. Tretmechanik nach einem der Ansprüche 1 bis 13, **dadurch gekennzeichnet, dass** die Schwenkbewegung mit einer Verkantbewegung der Schuhauflage (15) kombiniert ist.

15. Tretmechanik nach einem der Ansprüche 1 bis 14, **dadurch gekennzeichnet, dass** die Pedalachse (17) und die Schuhauflage (15) derart miteinander gekoppelt sind, dass bei einer Drehung der Pedalachse (17) die Schuhauflage (15) derart miteinander gekoppelt sind, dass bei einer Drehung um die Pedalachse (17) die Schuhauflage (15) im Fußbereich zusätzlich eine Verkantbewegung aus der Ebene der Schuhauflage (15) heraus vollführt.

16. Tretmechanik nach einem der Ansprüche 1 bis 15, **dadurch gekennzeichnet, dass** an der Pedalachse (17) eine Kurvenbahn (33) derart ausgebildet ist und mit der Schuhauflage (15) in Verbindung steht, dass die Schuhauflage (15) bei der Drehung der Tretmechanik um die Pedalachse eine Schwenkbewegung in der Ebene der Schuhauflage (15) und aus dieser heraus vollführt.

17. Tretmechanik nach einem der Ansprüche 1 bis 16, **dadurch gekennzeichnet, dass** eine kegelstumpfförmige Hülse (41) mit einer Kurvenbahn (33) an der Pedalachse (17) drehfest angeordnet ist.

18. Tretmechanik nach Anspruch 17, **dadurch gekennzeichnet, dass** die Schuhauflage (15) sich einerseits an der Hülse (41, 23) bzw. der Kurvenbahn (33) und andererseits an der Pedalachse (17) abstützt.

19. Tretmechanik nach einem Anspruch 1 bis 18, **dadurch gekennzeichnet, dass** sich die Schuhauflage (15) auf einem Abstützbügel (14) abstützt.

20. Tretmechanik nach einem der Ansprüche 1 bis 19, **dadurch gekennzeichnet, dass** am Support (19) eine Fersenstütze (54) vorgesehen ist, an welchem die Schuhauflage (15) im Fersenbereich drehbar und/oder kugelgelenkartig angeordnet ist.

21. Tretmechanik nach einem der Ansprüche 1 bis 20, **dadurch gekennzeichnet, dass** an der Schuhauflage (15) Fixationsmittel (51, 53) zur lösbaren Befestigung vorgesehen sind.

22. Tretmechanik nach einem der Ansprüche 1 bis 21, **dadurch gekennzeichnet, dass** die Schuhauflage (15) ein Teil eines Schuhs, z. B. eine Schuhsohle, sein kann.

23. Tretmechanik nach einem der Ansprüche 1 bis 22, **dadurch gekennzeichnet, dass** die Schuhauflage (15) in einem Winkelbereich von wenigstens 5 Grad, vorzugsweise wenigstens 10 Grad und ganz besonders bevorzugt in einem Bereich zwischen 5 und ca. 20 Grad schwenkbar ist.

24. Fahrrad, Ergometer, oder sonstige Therapie-, Rehabilitations-, oder Fitnessgerät zur aktiven und/oder passiven Beugung und Streckung der Beine bzw. diese Bewegung beinhaltenden kombinierten Bewegungsabläufe insbesondere der in Folge dessen komplexen Bewegungsabläufe der Füße mit einer Tretmechanik gemäß einem der Ansprüche 1 bis 23.

25. Fahrrad, Ergometer oder sonstiges Therapie-, Rehabilitations-, oder Fitnessgerät nach Anspruch 24, **dadurch gekennzeichnet, dass** die Tretmechanik an einem Tretkurbelarm derart angeordnet ist, dass die Längsachse (12) der Schuhauflage (15) in der obersten Position des Tretkurbelarms sich im Wesentlichen parallel zu einer Ebene erstreckt, welche durch den sich drehenden Tretkurbelarm definiert ist, und in der untersten Position des Tretkurbelarms die Längsachse der Schuhauflage in einem Winkel zu dieser Ebene angeordnet ist.

26. Fahrrad, Ergometer oder sonstiges Therapie-, Rehabilitations-, oder Fitnessgerät nach Anspruch 24, **dadurch gekennzeichnet, dass** die Tretmechanik an einer Bewegungsschiene angeordnet ist.

27. Fahrrad, Ergometer oder sonstiges Therapie-, Rehabilitations- oder Fitnessgerät nach Anspruch 24 oder 26, **dadurch gekennzeichnet, dass** ein Bewegungswandler vorgesehen ist, welcher eine Streckbewegung in eine Rotation einer Pedalachse wandelt.

## Claims

1. Treading mechanism for use on a bicycle, ergometer or other therapeutical, rehabilitation or fitness device, the application occurring during active and/or passive leg flexion and extension for active and/or passive leg flexion or extension or complex motion sequences including this movement and especially the consequent complex feet motion sequences, comprising
- one support (19) and
- a foot or shoe rest (15) arranged on the support (19),
- where the shoe rest (15) is located in a swivelling position on the support (19) at an angle for the longitudinal extension (12) of the shoe rest (15),
**characterized in that**
a pedal shaft (17) is provided, and the shoe rest (15) and the support (19) are coupled to one another in such a way that, during a rotational movement of the treading mechanism around the pedal shaft (17), the shoe rest (15) performs a swivel motion relative to the support (19).

2. Treading mechanism as claimed in claim 1 **characterized in that** the swivel motion corresponds to a bent path of movement.

3. Treading mechanism as claimed in claim 1 or 2, **characterized in that** a pedal shaft (17) is provided, and the shoe rest (15) and the support (19) coupled to one another in such a way that, during a rotational movement of the treading mechanism around the pedal shaft (17), the shoe rest (15) performs a rotational and swivelling motion relative to the support (19) by a rotational movement perpendicularly to the plane of the shoe rest (15) and a swivel motion in the plane of the shoe rest (15).

4. Treading mechanism as claimed in claim 1, **characterized in that** the shoe rest (15) swivels in a plane which is situated in parallel to the pedal shaft (17).

5. Treading mechanism as claimed in any claim 1 through 4, **characterized in that** guiding means (25, 27) cooperating with one another are designed in such a way at the pedal shaft (17) and at the shoe rest (15) that, during a rotation of the treading mechanism, the shoe rest (15) performs at least one swivel motion in the plane of the shoe rest (15).

6. Treading mechanism as claimed in any claim 1 through 5, **characterized in that** a cam or guideway (25) is designed at the pedal shaft (17) and a cam (27) is designed at the shoe rest (15), and the cam (27) meshes with the guideway.

7. Treading mechanism as claimed in any claim 1 through 6, **characterized in that** a sleeve (23) is provided which is slipped over the pedal shaft (17) and positionable and in which the curve path (25) is formed.

8. Treading mechanism as claimed in any claim 1 through 7, **characterized in that** the shoe rest (15) is guided by at least one slide/rail system provided at the treading mechanism in a plane extending in parallel to the pedal shaft (17) along a path of movement.

9. Treading mechanism as claimed in claim 8, **characterized in that** the path of movement corresponds to a curve path whose rotary guide is located in the heel area.

10. Treading mechanism as claimed in claim 9, **characterized in that** the path of movement corresponds to a curve path whose rotary guide is located in the heel area, and **in that** the path of movement is bent in a convex form in addition.

11. Treading mechanism as claimed in any claim 1 through 10, **characterized in that** two guide bars, on which the slide is movable back and forth, are provided at the support (19), **in that** a first cam is provided at the slide and engages in a first guideway at the pedal shaft, **in that** a shoe rest is supported in a rotatable manner on the slide, and **in that**, at the support (19), a second guideway is provided which is engaged by a second pin (75) located at the shoe rest.

12. Treading mechanism as claimed in any claim 1 through 10, **characterized in that**, at the support (19), a gear system (83) is provided and driven by the pedal shaft, **in that** a motion converter (85) is provided at the gear system (83) which is connected to the slide (61) via a rod linkage (87).

13. Treading mechanism as claimed in any claim 1 through 10, **characterized in that** the support (19) has a heel support (54) formed toward the rear to which a lever (81) is pivoted which is connected to the slide (61).

14. Treading mechanism as claimed in any claim 1 through 13, **characterized in that** the swivel motion is combined with a tilting motion of the shoe rest (15).

15. Treading mechanism as claimed in any claim 1 through 14, **characterized in that** the pedal shaft (17) and the shoe rest (15) are coupled to one another in such a way that, during a pedal shaft (17) rotation, the shoe rest (15) is coupled with one another in such a way that, during a rotation around the pedal shaft (17), the shoe rest (15) performs an additional tilting motion out of the shoe rest (15) plane in the foot area.

16. Treading mechanism as claimed in any claim 1 through 15, **characterized in that** a curve path (33) is designed at the pedal shaft (17) and connected to the shoe rest (15) in such a way that the shoe rest (15) performs a swivel motion in the shoe rest (15) plane and out of this plane during the rotational movement of the treading mechanism around the pedal shaft.

17. Treading mechanism as claimed in any claim 1 through 16, **characterized in that** a frusto-conical sleeve (41) with a curve path (33) is located in a torque proof position at the pedal shaft (17).

18. Treading mechanism as claimed in claim 17, **characterized in that** the shoe rest (15) is supported on the sleeve (41, 23) or, correspondingly, on the curve path (33) on the one hand, and on the pedal shaft (17) on the other hand.

19. Treading mechanism as claimed in any claim 1 through 18, **characterized in that** the shoe rest (15) is supported on a supporting stirrup (14).

20. Treading mechanism as claimed in any claim 1 through 19, **characterized in that**, at the support (19), a heel support (54) is provided at which the shoe rest (15) is pivoted and/or located in the way of a ball joint in the heel area.

21. Treading mechanism as claimed in any claim 1 through 20, **characterized in that** fastening means (51, 53) for detachable fastening are provided at the shoe rest (15).

22. Treading mechanism as claimed in any claim 1 through 21, **characterized in that** the shoe rest (15) may be a part of a shoe, e.g., a shoe sole.

23. Treading mechanism as claimed in any claim 1 through 22, **characterized in that** the shoe rest (15) swivels in an angle range of at least 5 degrees, preferably, over at least 10 degrees, and, as particularly preferred, in a range of between 5 and approx. 20 degrees.

24. Bicycle, ergometer or other therapeutical, rehabilitation or fitness device for active and/or passive leg flexion and extension or combined motion sequences including this movement and especially the feet motion sequences which are complex due to this, having a treading mechanism as claimed in any claim 1 through 23.

25. Bicycle, ergometer or other therapeutical, rehabilitation or fitness device as claimed in claim 24, **characterized in that** the treading mechanism is located at a tread crank arm in such a way that the longitudinal axis (12) of the shoe rest (15) in the topmost tread crank arm position extends essentially in parallel to a plane defined by the rotating tread crank arm, and **in that** the longitudinal axis of the
shoe rest is located at an angle to this plane in the bottom position of the tread crank arm.

26. Bicycle, ergometer or other therapeutical, rehabilitation or fitness device as claimed in claim 24, **characterized in that** treading mechanism is located at a motion rail.

27. Bicycle, ergometer or other therapeutical, rehabilitation or fitness device as claimed in claim 24 or 26, **characterized in that** a motion converter is provided which converts an extension movement into a pedal shaft rotation.

## Revendications

1. Mécanisme à pédalier destiné à être utilisé sur une bicyclette, un ergomètre, ou d'autres engins de thérapie, de rééducation ou d'entretien de la forme physique, utilisable lors de la flexion et de l'extension actives et/ou passives des jambes, pour la flexion et l'extension actives et/ou passives des jambes ou pour des mouvements de travail comprenant ce mouvement, en particulier pour les mouvements de travail complexes des pieds réalisés lors de son exécution, comportant :
- un support (19), et
- un appui de pied ou de chaussure (15) disposé sur le support (19),
- l'appui de pied ou de chaussure (15) étant disposé de manière à pouvoir pivoter sur le support (19) suivant un angle relatif à l'extension longitudinale (12) de l'appui de pied (15),
**caractérisé**
**en ce qu'**il est prévu un axe de pédale (17), et que l'appui de chaussure (15) et le support (19) sont accouplés l'un à l'autre de telle manière que l'appui de chaussure (15) exécute un mouvement de pivotement relativement au support (19) lors d'une rotation du mécanisme à pédalier autour de l'axe de pédale (17).

2. Mécanisme à pédalier selon la revendication 1, **caractérisé en ce que** le pivotement correspond à une trajectoire de déplacement courbe.

3. Mécanisme à pédalier selon la revendication 1 ou 2, **caractérisé en ce qu'**il est prévu un axe de pédale (17), et que l'appui de chaussure (15) et le support (19) sont accouplés l'un à l'autre de telle manière que l'appui de chaussure (15) exécute un mouvement de rotation et de pivotement relativement au support (19) lors d'une rotation du mécanisme à pédalier autour de l'axe de pédale (17), par un mouvement de rotation perpendiculairement au plan de l'appui de chaussure (15) et un mouvement de pivotement sur le plan de l'appui de chaussure (15).

4. Mécanisme à pédalier selon la revendication 1, **caractérisé en ce que** l'appui de chaussure (15) est pivotant sur un plan parallèle à l'axe de pédale (17).

5. Mécanisme à pédalier selon l'une des revendications 1 à 4, **caractérisé en ce que** des moyens de guidage (25, 27) coopérant entre eux sont réalisés sur l'axe de pédale (17) et l'appui de chaussure (15), de telle manière l'appui de chaussure (15) exécute au moins un mouvement de pivotement sur le plan de l'appui de chaussure (15) lors d'une rotation du mécanisme à pédalier.

6. Mécanisme à pédalier selon l'une des revendications 1 à 5, **caractérisé en ce qu'**une rainure ou une glissière de guidage (25) est formée sur l'axe de pédale (17), et une came (27) sur l'appui de chaussure (15), et **en ce que** la came (27) s'engrène dans la glissière de guidage.

7. Mécanisme à pédalier selon l'une des revendications 1 à 6, **caractérisé en ce qu'**il est prévu un manchon (23) emmanché et positionnable sur l'axe de pédale (17), où est formée la glissière de came (25).

8. Mécanisme à pédalier selon l'une des revendications 1 à 7, **caractérisé en ce que** l'appui de chaussure (15) est guidé le long d'une trajectoire de déplacement sur un plan s'étendant parallèlement à l'axe de pédale (17) au moyen d'au moins un système à chariot/rail prévu sur le mécanisme à pédalier.

9. Mécanisme à pédalier selon la revendication 8, **caractérisé en ce que** la trajectoire de déplacement correspond à une glissière de came dont le guidage de rotation est situé au niveau du talon.

10. Mécanisme à pédalier selon la revendication 9, **caractérisé en ce que** la trajectoire de déplacement correspond à une glissière de came dont le guidage de rotation est situé au niveau du talon et **en ce que** la trajectoire de déplacement est en outre à incurvation convexe.

11. Mécanisme à pédalier selon l'une des revendications 1 à 10, **caractérisé en ce que** deux barres de guidage sont prévues sur le support (19), sur lesquelles le chariot est disposé de manière à être mobile en va-et-vient, **en ce qu'**une première came est prévue sur le chariot, laquelle s'engage dans une première glissière de guidage sur l'axe de pédale, **en ce qu'**un appui de chaussure rotatif est monté sur le chariot, et **en ce qu'**une deuxième glissière de guidage est prévue sur le support (19), dans laquelle s'engage une deuxième goupille (75) disposée sur l'appui de chaussure.

12. Mécanisme à pédalier selon l'une des revendications 1 à 10, **caractérisé en ce qu'**un engrenage (83) est prévu sur le support (19), lequel est entraîné par l'axe de pédale, **en ce qu'**un convertisseur de mouvement (85) est prévu sur l'engrenage (83), lequel est relié par une tringle (87) au chariot (61).

13. Mécanisme à pédalier selon l'une des revendications 1 à 10, **caractérisé en ce que** le support (19) présente un soutien de talon (54) formé sur l'arrière, sur lequel est articulé un levier (81) rotatif relié au chariot (61).

14. Mécanisme à pédalier selon l'une des revendications 1 à 13, **caractérisé en ce que** le mouvement de pivotement est associé à un mouvement de bascule de l'appui de chaussure (15).

15. Mécanisme à pédalier selon l'une des revendications 1 à 14, **caractérisé en ce que** l'axe de pédale (17) et l'appui de chaussure (15) sont accouplés l'un à l'autre de telle manière que l'appui de chaussure (15) exécute en outre au niveau du pied un mouvement de bascule en dehors du plan de l'appui de chaussure (15) lors d'une rotation du mécanisme à pédalier autour de l'axe de pédale (17).

16. Mécanisme à pédalier selon l'une des revendications 1 à 15, **caractérisé en ce qu'**une glissière de came (33) est formée sur l'axe de pédale (17) et est reliée à l'appui de chaussure (15) de telle manière que l'appui de chaussure (15) exécute un mouvement de pivotement sur le plan de l'appui de chaussure (15) et en dehors de celui-ci lors de la rotation du mécanisme à pédalier autour de l'axe de pédale (17).

17. Mécanisme à pédalier selon l'une des revendications 1 à 16, **caractérisé en ce qu'**un manchon (41) en forme de cône tronqué est disposé fixement en rotation avec une glissière de came (33) sur l'axe de pédale (17).

18. Mécanisme à pédalier selon la revendication 17, **caractérisé en ce que** l'appui de chaussure (15) s'appuie d'un côté sur le manchon (41, 23) ou la glissière de came (33) et de l'autre côté sur l'axe de pédale (17).

19. Mécanisme à pédalier selon l'une des revendications 1 à 18, **caractérisé en ce que** l'appui de chaussure (15) s'appuie sur un étrier de soutien (14).

20. Mécanisme à pédalier selon l'une des revendications 1 à 19, **caractérisé en ce qu'**un soutien de talon (54) est prévu sur le support (19), sur lequel est disposé l'appui de chaussure (15) au niveau du talon de manière rotative et/ou par articulation sphérique.

21. Mécanisme à pédalier selon l'une des revendications 1 à 20, **caractérisé en ce que** des moyens de fixation (51, 53) sont prévus pour une fixation amovible sur l'appui de chaussure (15).

22. Mécanisme à pédalier selon l'une des revendications 1 à 21, **caractérisé en ce que** l'appui de chaussure (15) peut être une partie d'une chaussure, une semelle de chaussure p. ex.

23. Mécanisme à pédalier selon l'une des revendications 1 à 22, **caractérisé en ce que** l'appui de chaussure (15) est pivotant dans une plage angulaire de 5 degrés au moins, de préférence de 10 degrés au moins, et notablement préférentiellement dans une plage comprise entre 5 et 20 degrés environ.

24. Bicyclette, ergomètre, ou autre engin de thérapie, de rééducation ou d'entretien de la forme physique, pour la flexion et l'extension actives et/ou passives des jambes ou pour des mouvements de travail comprenant ce mouvement, en particulier pour les mouvements de travail complexes des pieds réalisés lors de son exécution, comportant un mécanisme à pédalier selon l'une des revendications 1 à 23.

25. Bicyclette, ergomètre, ou autre engin de thérapie, de rééducation ou d'entretien de la forme physique selon la revendication 24, **caractérisé**(e) en ce que le mécanisme à pédalier est disposé sur un bras de manivelle de pédale de telle manière que l'axe longitudinal (12) de l'appui de chaussure (15) s'étende en position supérieure du bras de manivelle de pédale sensiblement parallèlement à un plan défini par le bras de manivelle de pédale rotatif, et que l'axe longitudinal de l'appui de chaussure soit angulairement disposé relativement à ce plan en position inférieure du bras de manivelle de pédale.

26. Bicyclette, ergomètre, ou autre engin de thérapie, de rééducation ou d'entretien de la forme physique selon la revendication 24, **caractérisé**(e) en ce que le mécanisme à pédalier est disposé sur un rail de déplacement.

27. Bicyclette, ergomètre, ou autre engin de thérapie, de rééducation ou d'entretien de la forme physique selon la revendication 24 ou 26, **caractérisé**(e) en ce qu'il est prévu un convertisseur de mouvement, lequel convertit un mouvement d'extension en une rotation d'un axe de pédale.
